# EUROPÄISCHE PATENTSCHRIFT

(11) **EP 2 546 534 B1**
(45) Veröffentlichungstag und Bekanntmachung des Hinweises auf die Patenterteilung: **18.10.2017**
(21) Anmeldenummer: 12161859.9
(22) Anmeldetag: 28.03.2012
(51) Int. Cl.: F16C 32/04

(54) **Turbomaschine**
Turbomachine
Turbomachine

(30) Priorität: 15.07.2011 DE 102011051885
(43) Veröffentlichungstag der Anmeldung: 16.01.2013
(73) Patentinhaber: Atlas Copco Energas GmbH, 50999 Köln (DE)
(72) Erfinder: Kochetov, Dmitry Dr., 111555 Moscow (RU); Wiebe, Frank, 41542 Dormagen-Gohr (DE)
(74) Vertreter: Lorenz, Bernd Ingo Thaddeus

(56) Entgegenhaltungen:
- JP-A- 2008 175 293
- JP-U- S6 392 821
- US-A- 5 310 311
- US-A- 5 469 007
- US-A- 5 640 472

## Beschreibung

Die Erfindung betrifft eine Turbomaschine gemäß dem Oberbegriff des Patentanspruches 1.

Magnetlager ermöglichen eine berührungslose und damit verschleißfreie Lagerung und sind deshalb in besonderem Maße für schnell drehende Anlagen wie Turbomaschinen geeignet. Zwischen den rotorseitigen und statorseitigen Teilen des Magnetlagers verbleibt ein Spalt, der möglichst konstant gehalten werden soll. Insbesondere muss ein direkter Kontakt aufgrund von Kippmomenten, Stößen oder dergleichen vermieden werden. Bei einem aktiven Magnetlager wird deshalb die Rotorposition mit dem Spaltsensor laufend bestimmt, wobei dann durch eine entsprechende Ansteuerung des Magnetlagers Rückstellkräfte bereitgestellt werden, welche den Rotor, das heißt die Rotorwelle, zurück in eine Soll-Lage drängen.

Um eine ständige Positionsbestimmung mit dem zumindest einen Spaltsensor zu ermöglichen, ist an der Rotorwelle eine mit dem zumindest einen Spaltsensor zusammenwirkende Zielfläche angeordnet, die bereits bei der Herstellung der Rotorwelle vorgesehen werden muss.

Als Zielfläche werden bei Turbomaschinen in der Praxis üblicherweise feine Lamellenpakete eingesetzt, die bei der Herstellung der Rotorwelle angebracht werden. Hierzu werden die Lamellenpakete vormontiert, vorbearbeitet, auf die Rotorwelle geschrumpft und dann am Außendurchmesser der Rotorwelle fein bearbeitet. Durch das Zusammenwirken des Lamellenpaketes und des Spaltsensors wird ein vom Abstand abhängiges Signal und damit die genaue Position der Welle bestimmt. Diese Vorgehensweise hat sich in der Praxis bewährt. Der Fertigungsaufwand und damit die Fertigungskosten sind jedoch hoch, wobei der Außendurchmesser der Rotorwelle durch die Anordnung des Lamellenpaketes erhöht ist.

Aus der JP 2008-175 293 A ist eine gattungsgemäße Turbomaschine bekannt, bei der an radialen Lagerscheiben ein Sensortarget aus Kupfer für die Positionsbestimmung in axialer Richtung vorgesehen ist.

Vor diesem Hintergrund liegt der Erfindung die Aufgabe zugrunde, bei einer Turbomaschine mit den eingangs beschriebenen Merkmalen den Fertigungsaufwand zu verringern, ohne die Funktionalität zu beeinträchtigen.

Gegenstand der Erfindung und Lösung der Aufgabe ist eine Turbomaschine gemäß Patentanspruch 1.

Im Vergleich zu der Anordnung eines Lamellenpaketes wird die Herstellung erheblich vereinfacht. Darüber hinaus ist der Platzbedarf für die Kupferschicht deutlich geringer als für die Anordnung eines Lamellenpaketes. Insbesondere kann die Kupferschicht auch in einer Nut der Rotorwelle angeordnet sein, so dass dann die von der Kupferschicht gebildete Zielfläche bündig in die Oberfläche der Rotorwelle integriert werden kann oder nur geringfügig vorsteht. Neben geringeren Fertigungs- und Montagekosten kann durch den kleineren Durchmesser auch die Rotordynamik verbessert werden.

Im Rahmen der Erfindung ist der Spaltsensor zur Positionsbestimmung in radialer Richtung vorgesehen, wobei die Kupferschicht an einem Außendurchmesser der Rotorwelle angeordnet ist. Eine solche Sensoranordnung ist dazu vorgesehen, um ein aktives Radial-Magnetlager zu steuern. Schließlich kann die Lageranordnung im Rahmen der Erfindung zumindest auch ein aktives Axial-Magnetlager sowie zumindest ein aktives Radial-Magnetlager aufweisen, wobei zur Steuerung beider Magnetlager jeweils zumindest ein Spaltsensor sowie eine Zielfläche aus einer Kupferschicht auf der Rotorwelle vorgesehen sind. Wie zuvor beschrieben, erstreckt sich eine Kupferschicht zweckmäßigerweise an dem Außendurchmesser der Rotorwelle, während die andere Kupferschicht senkrecht zu der Drehachse an einer Stirnfläche angeordnet ist.

Um eine kontinuierliche Positionsbestimmung zu ermöglichen, ist die Zielfläche in Form der Kupferbeschichtung ringförmig ausgebildet.

Um die Genauigkeit der Positionsbestimmung zu erhöhen, können für eine üblicherweise ringförmig ausgebildeten Zielfläche mehrere Spaltsensoren vorgesehen sein, die in Umfangsrichtung verteilt angeordnet sind. Dann besteht auch die Möglichkeit durch eine Differenzbildung bzw. durch einen Vergleich der Sensorsignale etwaige Störungen herauszurechnen, wobei auch bei dem Ausfall eines Sensors eine gewisse Redundanz möglich ist. Schließlich kann auch festgestellt werden, wenn einer von mehreren Sensoren ein verfälschtes Signal liefert.

Die weitere Ausgestaltung der Turbomaschine ist im Rahmen der Erfindung nicht eingeschränkt. Insbesondere kann die Turbomaschine ein Kompressor, Expander oder ein Kompander mit zumindest einer Kompressorstufe und einer Expansionsstufe sein.

Die Erfindung wird im Folgenden anhand einer lediglich ein Ausführungsbeispiel darstellenden Zeichnung erläutert. Es zeigen:
- Fig. 1: eine erfindungsgemäße Turbomaschine,
- Fig. 2: eine Detailansicht einer Rotorwelle der Turbomaschine im Bereich eines Sensors zur Bestimmung der Radial-Lage,
- Fig. 3: eine Detailansicht der Rotorwelle im Bereich eines Spaltsensors zur Bestimmung der Axial-Lager.

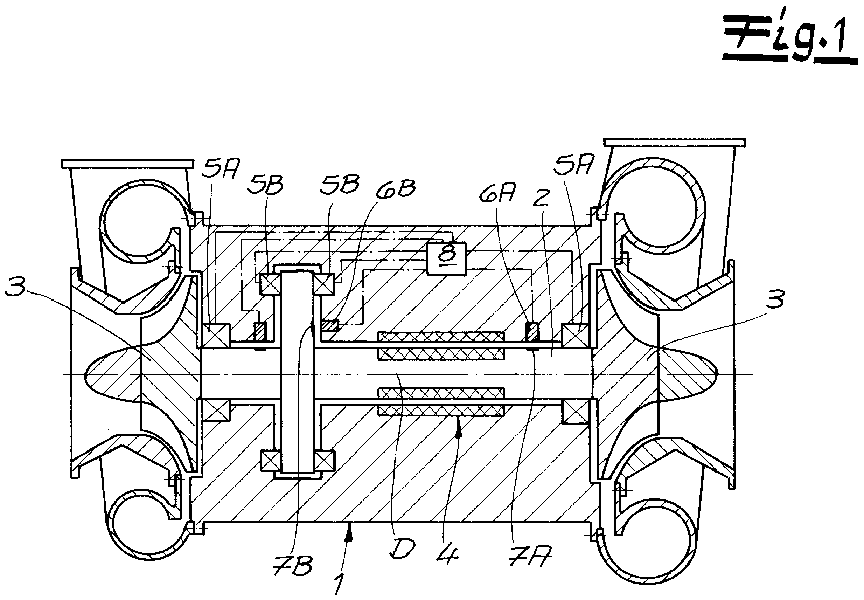

Die Fig. 1 zeigt eine Turbomaschine, die gemäß in ihrem allgemeinen Aufbau ein Maschinengehäuse 1 sowie eine in dem Maschinengehäuse 1 gelagerte Rotorwelle 2 aufweist. In dem dargestellten Ausführungsbeispiel trägt die Rotorwelle 2 zwei an ihren Enden fliegend angeordnete Laufräder 3, die zur Komprimierung oder Expansion eines Arbeitsmediums vorgesehen sind. Des Weiteren ist eine elektrische Maschine 4 angedeutet, die je nach Betrieb der Turbomaschine als Generator oder Motor ausgeführt ist.

Die Turbomaschine weist eine Lageranordnung auf, die in dem Ausführungsbeispiel zwei aktive Radial-Magnetlager 5A sowie zwei aktive Axial-Magnetlager 5B aufweist. Um an den Magnetlagern 5A, 5B Abweichungen von einer Soll-Lage feststellen und ausgleichen zu können, sind Spaltsensoren 6A, 6B vorgesehen, die mit Zielflächen 7A, 7B auf der Rotorwelle 2 zusammenwirken, wobei aus dem Sensorsignal der Abstand zwischen den Spaltsensoren 6A, 6B und den zugeordneten Zielflächen 7A, 7B abgeleitet werden kann. Dazu sind die Spaltsensoren 6A, 6B an eine Steuerelektronik 8 angeschlossen, welche abhängig von den Sensorsignalen den Stromfluss durchspulen der Magnetlager 5A, 5B steuert, um bei der Auslenkung der Rotorwelle 2 aus einer Soll-Lage Rückstellkräfte in radialer bzw. axialer Richtung zu erzeugen.

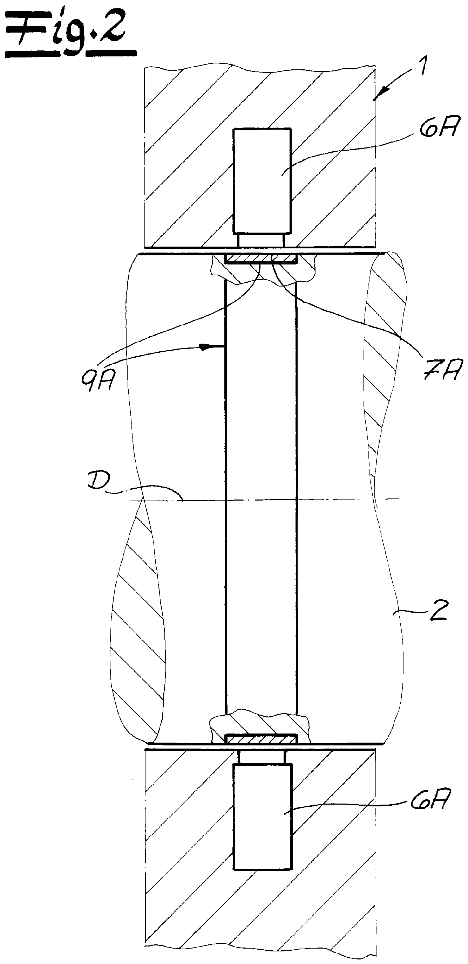

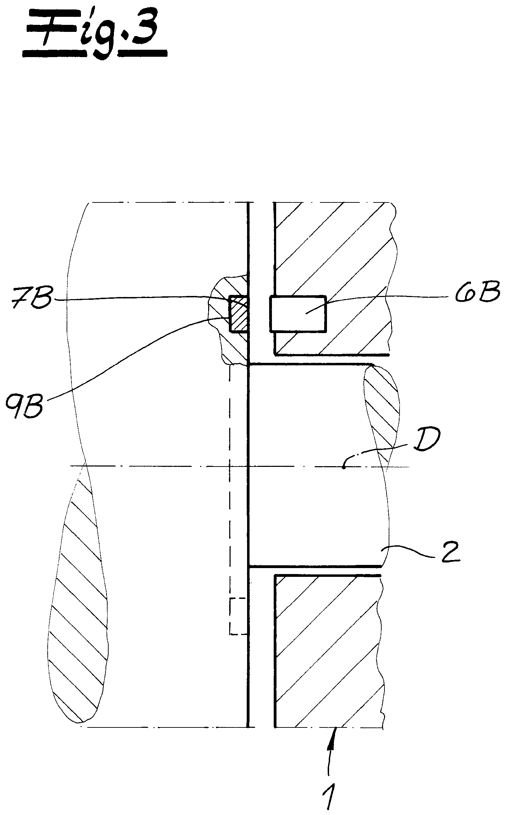

Die Fig. 2 und 3 zeigen exemplarisch den Bereich eines Spaltsensors 6A bzw. 6B zur radialen bzw. axialen Positionsbestimmung in einer schematischen Darstellung.

Gemäß der Fig. 2 ist als Zielfläche 7A eine auf ein Grundmaterial der Rotorwelle 2 aufgebrachte Kupferschicht vorgesehen, die sich ringförmig an einem Außendurchmesser der Rotorwelle 2 erstreckt. Die Kupferschicht ist in einer an dem Außenumfang der Rotorwelle 2 umlaufenden Nut 9A angeordnet, so dass die Kupferschicht flächenbündig in die Oberfläche der Rotorwelle 2 integriert ist. Der zugeordnete Spaltsensor 6A kann damit in einem geringen Abstand zu der Rotorwelle 2 angeordnet werden.

In der Fig. 2 ist des Weiteren angedeutet, dass zur radialen Positionsbestimmung mehrere Spaltsensoren 6A vorgesehen sein können, um die Messgenauigkeit zu erhöhen und/oder die Zuverlässigkeit der Messung zu verbessern.

Gemäß der Fig. 3 ist zur Bestimmung der Axiallage eine ähnliche Ausgestaltung vorgesehen, wobei die mit dem entsprechenden Sensor 6B zusammenwirkende Kupferschicht als Zielfläche 7B an einer senkrecht zu der Drehachse D der Rotorwelle 2 ausgerichteten Stirnfläche der Rotorwelle 2 angeordnet ist. Auch diese Kupferschicht ist in einer Nut 9B der Stirnfläche angeordnet, wobei die Zielfläche 7B ringförmig um den Umfang der Rotorwelle 2 umläuft. Auch zur axialen Bestimmung können mehrere Sensoren 6B vorgesehen sein.

Die Kupferschichten als Zielflächen 7A, 7B werden direkt bei der Herstellung der Rotorwelle 2 angeordnet. Im Gegensatz zu der aus dem Stand der Technik bekannten Anordnung von Lamellenpaketen ergibt sich eine erhebliche Vereinfachung und damit auch eine Reduzierung der Herstellungskosten.

## Patentansprüche

1. Turbomaschine mit einem Maschinengehäuse (1), einer zumindest ein Laufrad (3) tragenden Rotorwelle (2), einer zumindest ein aktives Magnetlager (5A, 5B) aufweisenden Lageranordnung, zumindest einem Spaltsensor (6A, 6B) und einer an den Spaltsensor (6A, 6B) angeschlossenen Steuerelektronik (8) zur Steuerung des aktiven Magnetlagers (5A, 5B), wobei auf der Rotorwelle (2) zur Positionsbestimmung mittels des Spaltsensors (6A, 6B) eine mit dem Spaltsensor (6A, 6B) zusammenwirkende Zielfläche (7A, 7B) angeordnet ist, wobei als Zielfläche (7A, 7B) eine auf ein Grundmaterial der Rotorwelle (2) aufgebrachte, ringförmige Kupferschicht vorgesehen ist, welche in einer Nut (9A, 9B) der Rotorwelle (2) angeordnet ist, **dadurch gekennzeichnet, dass** der Spaltsensor (6A) zur Positionsbestimmung in radialer Richtung vorgesehen ist, wobei die Kupferschicht an einem Außendurchmesser der Rotorwelle (2) angeordnet ist.

2. Turbomaschine nach Anspruch1, **dadurch gekennzeichnet, dass** die Kupferschicht flächenbündig in die Oberfläche der Rotorwelle (2) integriert ist.

3. Turbomaschine nach Anspruch 1 oder 2, **dadurch gekennzeichnet, dass** mehrere mit der Kupferschicht zusammenwirkende Spaltsensoren (6A, 6B) in Umfangsrichtung verteilt angeordnet sind.

4. Turbomaschine nach einem der Ansprüche 1 bis 3, **dadurch gekennzeichnet, dass** die Lageranordnung zumindest ein aktives Axial-Magnetlager (5B) sowie zumindest ein aktives Radial-Magnetlager (5A) aufweist, wobei zur Steuerung beider Magnetlager (5A, 5B) jeweils zumindest ein Spaltsensor (6A, 6B) sowie eine Zielfläche (7A, 7B) aus einer Kupferschicht auf der Rotorwelle (2) vorgesehen sind.

## Claims

1. A turbo engine with an engine housing (1), a rotor shaft (2) bearing at least one wheel (3), a bearing arrangement having at least one active magnetic bearing (5A, 5B), at least one gap sensor (6A, 6B) and control electronics (8) connected to the gap sensor (6A, 6B) to control the active magnetic bearing (5A, 5B), whereby a target surface (7A, 7B) that interacts with the gap sensor (6A, 6B) is situated on the rotor shaft (2) for positioning by means of the gap sensor (6A, 6B), whereby a ring-shaped copper layer applied onto a base material of the rotor shaft (2) is provided as a as a target surface (7A, 7B), which is situated in a groove (9A, 9B) of the rotor shaft (2), **characterized in that** the gap sensor (6A) is provided for positioning in a radial direction, whereby the copper layer is situated on an outer diameter of the rotor shaft (2).

2. The turbo engine according to claim 1, **characterized in that** the copper layer is integrated in a flush-mounted manner into the surface of the rotor shaft (2).

3. The turbo engine according to claim 1 or 2, **characterized in that** a plurality gap sensors (6A, 6B) interacting with the copper layer are distributed in a circumferential direction.

4. The turbo engine according to any one of claims 1 to 3, **characterized in that** the bearing arrangement has at least one active axial magnetic bearing (5B) and at least one active radial magnetic bearing (5A), whereby at least one gap sensor (6A, 6B) and one target surface (7A, 7B) made of a copper layer on the rotor shaft (2) are respectively provided to control both magnetic bearings (5A, 5B).

## Revendications

1. Turbomachine avec un carter de machine (1), un arbre de rotor (2) portant au moins une roue à aubes (3), un dispositif de palier comportant au moins un palier magnétique (5A, 5B) actif, au moins un capteur de fente (6A, 6B) et une électronique de commande (8) raccordée sur le capteur de fente (6A, 6B) pour commander le palier magnétique (5A, 5B) actif, pour déterminer la position au moyen du capteur de fente (6A, 6B), une surface cible (7A, 7B) coopérant avec le capteur de fente (6A, 6B) étant placée sur l'arbre de rotor (2), en tant que surface cible (7A, 7B) étant prévue une couche de cuivre de forme annulaire appliquée sur une matière de base de l'arbre de rotor (2), laquelle est placée dans une rainure (9A, 9B) de l'arbre de rotor (2), **caractérisée en ce que** le capteur de fente (6A) est prévu pour déterminer la position dans la direction radiale, la couche de cuivre étant placée sur un diamètre extérieur de l'arbre de rotor (2).

2. Turbomachine selon la revendication 1, **caractérisée en ce que** la couche de cuivre est intégrée à fleur de surface dans la surface de l'arbre de rotor (2).

3. Turbomachine selon la revendication 1 ou 2, **caractérisée en ce que** plusieurs capteurs de fente (6A, 6B) coopérant avec la couche de cuivre sont placés en étant distribués dans la direction périphérique.

4. Turbomachine selon l'une quelconque des revendications 1 à 3, **caractérisée en ce que** le dispositif de palier comporte au moins un palier magnétique (5B) actif axial, ainsi qu'au moins un palier magnétique (5A) actif radial, pour commander les deux paliers magnétiques (5A, 5B), respectivement au moins un capteur de fente (6A, 6B) ainsi qu'une surface cible (7A, 7B) en une couche de cuivre étant prévus sur l'arbre de rotor (2).
